# EUROPEAN PATENT APPLICATION

(11) **EP 4 266 124 A1**
(43) Date of publication of application: **25.10.2023**
(21) Application number: 23165121.7
(22) Date of filing: 29.03.2023
(51) Int. Cl.: G03G 9/097, G03G 9/08, G03G 9/087, G03G 9/09

(54) **TONER COMPOSITION**

(30) Priority: 18.04.2022 US 202217722535
(71) Applicant: Xerox Corporation, Webster, NY 14580 (US)
(72) Inventor: SAMBHY, Varun, Pittsford, 14534 (US); BADESHA, Santokh S., Pittsford, 14534 (US); ANGRA, Padam K., Pittsford, 14534 (US)
(74) Representative: Grünecker Patent- und Rechtsanwälte PartG mbB

(57) **Abstract**

A white toner having toner particles including: a resin; a BaSO₄ pigment; wherein a particle size is defined as Span = (Dn90-Dn10) / (Dn50); and wherein the BaSO₄ pigment has a wide particle size distribution wherein the Span is 0.75 or greater; and an optional wax. A pulverized (conventional) toner and an emulsion aggregation toner process.

## Description

### RELATED APPLICATIONS

Commonly assigned U.S. Patent Application No. 17/722,550, filed concurrently herewith, which is hereby incorporated by reference herein in its entirety, describes an aqueous inkjet ink composition comprising: water; an optional co-solvent; an optional dispersant; an optional resin; an optional wax; and a BaSO₄ pigment; wherein a particle size distribution is defined as Span = (Dn90-Dn10) / (Dn50); and wherein the BaSO₄ pigment has a wide particle size distribution wherein the Span is 0.75 or greater.

### BACKGROUND

Disclosed herein is a white toner having toner particles comprising: a resin; a BaSO₄ pigment; wherein a particle size is defined as Span = (Dn90-Dn10) / (Dn50); and wherein the BaSO₄ pigment has a wide particle size distribution wherein the Span is 0.75 or greater; and an optional wax.

Also disclosed herein is a method for preparing a white pulverized toner, the method comprising: mixing a resin; a BaSO₄ pigment, wherein a particle size is defined as Span = (Dn90-Dn10) / (Dn50), and wherein the BaSO₄ pigment has a wide particle size distribution wherein the Span is 0.75 or greater; an optional wax, and an optional internal additive to form a mixture; melting and extruding the mixture to form a melt-kneaded product; pulverizing the melt-kneaded product to form white toner particles; optionally, classifying the white toner particles; and optionally, disposing one or more surface additives onto the white toner particles.

Also disclosed herein is an emulsion aggregation toner process comprising: obtaining a latex of at least one resin; obtaining an aqueous dispersion of a BaSO₄ pigment, wherein a particle size is defined as Span = (Dn90-Dn10) / (Dn50), and wherein the BaSO₄ pigment has a wide particle size distribution wherein the Span is 0.75 or greater; optionally, obtaining an aqueous dispersion of an optional wax; forming a mixture of the latex of at least one resin, the aqueous dispersion of the BaSO₄ pigment, and the aqueous dispersion of the optional wax; heating the mixture to a first temperature; maintaining the first temperature to form aggregated toner particles; adding a latex of shell resin to form a shell over the aggregated particles; optionally, adding a solution of a chelating agent; stopping further aggregation and raising the temperature to a second temperature that is higher than the first temperature to coalesce the aggregated particles; cooling, optionally washing, optionally drying, and recovering the emulsion aggregation toner particles.

Electrophotographic printing uses toner particles which may be produced by a variety of processes. One such process includes an emulsion aggregation ("EA") process that forms toner particles in which surfactants are used in forming a latex emulsion. See, for example, U.S. Patents 6,120,967 and 8,617,780, which are hereby incorporated by reference herein in their entireties. Another such process vastly different than EA includes a pulverization method wherein a mixture is crushed into a toner powder.

White toner may be used to print or make a white background on a black or colored substrate, such as print media, or on a transparent substrate, like film. The white toner must have sufficient masking or hiding power over the substrate while maintaining acceptable charging.

White toners are highly desirable for color gamut enhancement and for packaging and label press applications. It is known to have a white emulsion aggregation toner in a toner machine such as in a fifth color station in addition to the cyan, magenta, yellow, and black stations. These white emulsion aggregation toners currently use titanium dioxide (TiO₂).

The CIELAB color space (also known as CIE L*a*b* or sometimes abbreviated as simply "Lab" color space) is a color space defined by the International Commission on Illumination (CIE) in 1976. It expresses color as three values: L* for the lightness from black (0) to white (100), a* from green (-) to red (+), and b* from blue (-) to yellow (+).

Because three parameters are measured, the space itself is a three-dimensional real number space, which allows for infinitely many possible colors. In practice, the space is usually mapped onto a three-dimensional integer space for digital representation, and thus the L*, a*, and b* values are usually absolute, with a pre-defined range. The lightness value, L*, represents the darkest black at L* = 0, and the brightest white at L* = 100. The color channels, a* and b*, represent true neutral gray values at a* = 0 and b* = 0. The a* axis represents the green-red component, with green in the negative direction and red in the positive direction. The b* axis represents the blue-yellow component, with blue in the negative direction and yellow in the positive direction. The scaling and limits of the a* and b* axes will depend on the specific implementation, but they often run in the range of ±100 or -128 to +127 (signed 8-bit integer). For further information, see the online encyclopedia, Wikipedia, at https://en.wikipedia.org/wiki/CIELAB_color_space.

U.S. Patent 9,964,883, which is hereby incorporated by reference herein in its entirety, describes in the Abstract thereof an apparatus and method of manufacturing a white dry ink pulverized toner including a resin and 15%-45% TiO₂ pigment having a mean size of 100-350 nm melt mixed with the resin in a twin screw extruder resulting in an extruded mix. The extruded mix is pulverized in a fluid bed jet mill. Fines of the pulverized extruded mix less than 5 microns may be removed from the pulverized particles having a mean size of 6-12 microns. The pulverized particles are blended in a mixer with surface additives including silica and ZnSt, and the white dry ink pulverized toner has a developer charge between 5 and 50 µC/gram and a Lightness (L*) of at least 75 at a toner mass per unit area (TMA) of at most 1.2 mg/cm².

U.S. Patent 10,705,442, which is hereby incorporated by reference herein in its entirety, describes in the Abstract thereof toner compositions containing a high loading of white colorant of greater than 30 weight % by weight of the toner and processes thereof. The toner exhibits a lightness (L*) of at least 75.

U.S. Patent 10,935,901, which is hereby incorporated by reference herein in its entirety, describes in the Abstract thereof metallic toner including flake shape toner particles having a binder resin, zinc stearate, silica having a particle size of from 7 nm to less than 12 nm in an amount of about 0.1 weight percent to about 1.0 weight percent of the flake shape toner particle and tabular shape metallic pigments. The flake shape toner particles have an average major axis length of from 6 µm to 20 µm, an average thickness of from 1 µm to 4 µm, and an average circularity of from 0.5 to 0.97. The tabular shape metallic pigments have an average major axis length of from 1 µm to 14 µm, and an average thickness of from 0.01 µm to 0.5 µm.

Current emulsion aggregation toners employing TiO₂ may require a TiO₂ white pigment loading of about 45 weight percent to meet L* target values of greater than 75. These toners have shortcomings including that TiO₂ has been deemed a category 2 suspected carcinogen and has come under regulatory scrutiny such as from the European Union. It is desirable to develop a replacement for TiO₂ such as for toner applications including for toner additives. It is particularly problematic that the loading of TiO₂ in white toner is so high in order to achieve the desired color characteristic. A safe and non-toxic white pigment is highly desirable for toner compositions. Further, even at 45 weight percent TiO₂ loading, certain prints, especially white prints on black cardstock paper, may require several passes to achieve the desired L* image quality including whiteness and opacity or hiding ability. A pigment that may enable meeting or exceeding L* toner print image performance is highly desirable.

Currently available toners are suitable for their intended purposes. However a need remains for improved white toner compositions. Further, a need remains for a safe and non-toxic white pigment suitable for a white toner composition. Further, a need remains for an improved white toner composition that does not require use of TiO₂ to achieve desired white printed images such as white printed images having a desired L* image quality including whiteness, opacity, and hiding ability.

The appropriate components and process aspects of the each of the foregoing U. S. Patents and Patent Publications may be selected for the present disclosure in embodiments thereof. Further, throughout this application, various publications, patents, and published patent applications are referred to by an identifying citation. The disclosures of the publications, patents, and published patent applications referenced in this application are hereby incorporated by reference into the present disclosure to more fully describe the state of the art to which this invention pertains.

### SUMMARY

Described is a white toner having toner particles comprising: a resin; a BaSO₄ pigment; wherein a particle size is defined as Span = (Dn90-Dn10) / (Dn50); and wherein the BaSO₄ pigment has a wide particle size distribution wherein the Span is 0.75 or greater; and an optional wax.

Also described is a method for preparing a white pulverized toner, the method comprising: mixing a resin; a BaSO₄ pigment, wherein a particle size is defined as Span = (Dn90-Dn10) / (Dn50), and wherein the BaSO₄ pigment has a wide particle size distribution wherein the Span is 0.75 or greater; an optional wax, and an optional internal additive to form a mixture; melting and extruding the mixture to form a melt-kneaded product; pulverizing the melt-kneaded product to form white toner particles; optionally, classifying the white toner particles; and optionally, disposing one or more surface additives onto the white toner particles.

Also described is an emulsion aggregation toner process comprising: obtaining a latex of at least one resin; obtaining an aqueous dispersion of a BaSO₄ pigment, wherein a particle size is defined as Span = (Dn90-Dn10) / (Dn50), and wherein the BaSO₄ pigment has a wide particle size distribution wherein the Span is 0.75 or greater; optionally, obtaining an aqueous dispersion of an optional wax; forming a mixture of the latex of at least one resin, the aqueous dispersion of the BaSO₄ pigment, and the aqueous dispersion of the optional wax; heating the mixture to a first temperature; maintaining the first temperature to form aggregated toner particles; adding a latex of shell resin to form a shell over the aggregated particles; optionally, adding a solution of a chelating agent; stopping further aggregation and raising the temperature to a second temperature that is higher than the first temperature to coalesce the aggregated particles; cooling, optionally washing, optionally drying, and recovering the emulsion aggregation toner particles.

### BRIEF DESCRIPTION OF THE DRAWINGS

Figure 1 is a pictorial rendition of a toner particle in accordance with the present embodiments.
Figure 2 is a flow chart illustrating a conventional pulverized toner process for preparing a white pulverized toner in accordance with the present embodiments.

### DETAILED DESCRIPTION

A toner composition and process is described providing a white toner including BaSO₄ (barium sulfate) pigment for xerographic development. In embodiments, the whiter toner is a conventional (pulverized) toner. In other embodiments, the white toner is an emulsion aggregation toner. The toner can be used in a fifth housing or print station in addition to CMYK housings in a printer such as a Xerox^{®} iGen^{®} 5 Press. BaSO₄ is a safe and non-toxic white crystalline solid pigment. The BaSO₄ pigment enables a white toner that avoids use of TiO₂. The BaSO₄ pigment enables white toners to meet or significantly exceed the whiteness (L*) property of prior white toners such as those prepared by emulsion aggregation using TiO₂.

"Ultra-white" paints made using BaSO₄ have been shown to have the highest whiteness/reflectivity known to date. See Li, et al., "Ultrawhite BaSO4 Paints and Films For Remarkable Daytime Subambient Radiative Cooling," ACS Appl. Mater. Interfaces 2021, 13, 21733-21739, which is hereby incorporated by reference herein in its entirety.

In embodiments, the present toner composition comprises BaSO₄ pigment having a broad particle size distribution which significantly enhances reflectance to provide a whiter, more opaque white toner. The present invention is contrary to convention toner wisdom which requires narrow particle size distribution for pigment in toner.

In embodiments, the white toner is prepared using conventional toner manufacturing processes. In other embodiments, the white toner is prepared using emulsion aggregation toner manufacturing processes.

BaSO₄ powder is employed in place of TiO₂ pigment. In embodiments, the white toner herein is completely free of, that is, does not contain, TiO₂ pigment. The toner surface may have additional additives such as additives for optimizing flow, charging, and cleaning characteristics.

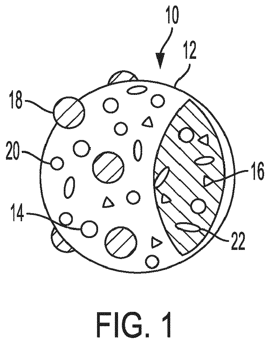

Turning to Figure 1, a white toner including barium sulfate (BaSO₄) pigment is illustrated. The toner particle herein contains BaSO₄ filler (as a pigment) embedded in the toner resin. The toner surface may have additional additives for imparting or improving flow, charging, and cleaning characteristics. Figure 1 provides a simplified illustration of a white toner 10 in accordance with the present embodiments. White toner particle 10 includes a resin 12 such as a polyester or styrene-acrylate resin, a wax 14, and a BaSO₄ pigment 16. Various internal additives 18 may be included in the toner particle 10. External surface additives 20, such as silica, titanium dioxide, zinc stearate, etc., may be included on the surface of the toner particle 10. The toner particle may also include charge control agents 22 which may also be considered external surface additives or internal additives.

In embodiments, a white toner is provided comprising particles comprising: a resin; a BaSO₄ pigment, and an optional wax.

The toner resin may be selected from any suitable or desired resin. In embodiments, the toner resin comprises a member selected from the group consisting of an amorphous polyester, a crystalline polyester, and combinations thereof.

Any toner resin may be utilized in forming a toner of the present disclosure. Such resins, in turn, may be made of any suitable monomer or monomers via any suitable polymerization method. In embodiments, the resin may be prepared by a method other than emulsion polymerization. In further embodiments, the resin may be prepared by condensation polymerization.

The toner composition of the present disclosure, in embodiments, includes an amorphous resin. The amorphous resin may be linear or branched. In embodiments, the amorphous resin may include at least one low molecular weight amorphous polyester resin. The low molecular weight amorphous polyester resins, which are available from a number of sources, can possess various melting points of, for example, from about 30 °C to about 120 °C, in embodiments from about 75 °C to about 115 °C, in embodiments from about 100 °C to about 110 °C, or in embodiments from about 104 °C to about 108 °C. As used herein, the low molecular weight amorphous polyester resin has, for example, a number average molecular weight (Mn), as measured by gel permeation chromatography (GPC) of, for example, from about 1,000 to about 10,000, in embodiments from about 2,000 to about 8,000, in embodiments from about 3,000 to about 7,000, and in embodiments from about 4,000 to about 6,000. The weight average molecular weight (Mw) of the resin is 50,000 or less, for example, in embodiments from about 2,000 to about 50,000, in embodiments from about 3,000 to about 40,000, in embodiments from about 10,000 to about 30,000, and in embodiments from about 18,000 to about 21,000, as determined by GPC using polystyrene standards. The molecular weight distribution (Mw/Mn) of the low molecular weight amorphous resin is, for example, from about 2 to about 6, in embodiments from about 3 to about 4. The low molecular weight amorphous polyester resins may have an acid value of from about 8 to about 20 mg KOH/g, in embodiments from about 9 to about 16 mg KOH/g, and in embodiments from about 10 to about 14 mg KOH/g.

Examples of linear amorphous polyester resins which may be utilized include poly(propoxylated bisphenol A co-fumarate), poly(ethoxylated bisphenol A co-fumarate), poly(butyloxylated bisphenol A co-fumarate), poly(co-propoxylated bisphenol A co-ethoxylated bisphenol A co-fumarate), poly(1,2-propylene fumarate), poly(propoxylated bisphenol A co-maleate), poly(ethoxylated bisphenol A co-maleate), poly(butyloxylated bisphenol A co-maleate), poly(co-propoxylated bisphenol A co-ethoxylated bisphenol A co-maleate), poly(1,2-propylene maleate), poly(propoxylated bisphenol A co-itaconate), poly(ethoxylated bisphenol A co-itaconate), poly(butyloxylated bisphenol A co-itaconate), poly(co-propoxylated bisphenol A co-ethoxylated bisphenol A co-itaconate), poly(1,2-propylene itaconate), and combinations thereof.

In embodiments, a suitable amorphous resin may include alkoxylated bisphenol A fumarate/terephthalate based polyesters and copolyester resins. In embodiments, a suitable amorphous polyester resin may be a copoly(propoxylated bisphenol A co-fumarate)-copoly(propoxylated bisphenol A co-terephthalate) resin having the following formula (I): 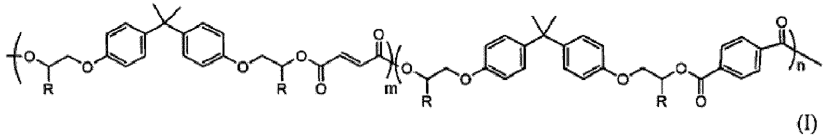 wherein R may be hydrogen or a methyl group, m and n represent random units of the copolymer, m may be from about 2 to 10, and n may be from about 2 to 10. Examples of such resins and processes for their production include those disclosed in U.S. Patent No. 6,063,827, the disclosure of which is hereby incorporated by reference herein in its entirety.

An example of a linear propoxylated bisphenol A fumarate resin which may be utilized as a latex resin is available under the trade name SPARII^{™} from Resana S/A Industrias Quimicas, Sao Paulo Brazil. Other suitable linear resins include those disclosed in Patents Nos. 4,533,614, 4,957,774, and 4,533,614, each of which is incorporated by reference herein in its entirety, which can be linear polyester resins including terephthalic acid, dodecylsuccinic acid, trimellitic acid, fumaric acid and alkoxylated bisphenol A, such as, for example, bisphenol-A ethylene oxide adducts and bisphenol-A propylene oxide adducts. Other propoxylated bisphenol A terephthalate resins that may be utilized and are commercially available include GTU-FC115, commercially available from Kao Corporation, Japan, and the like.

In embodiments, the low molecular weight amorphous polyester resin may be a saturated or unsaturated amorphous polyester resin. Illustrative examples of saturated and unsaturated amorphous polyester resins selected for the process and particles of the present disclosure include any of the various amorphous polyesters, such as polyethylene-terephthalate, polypropylene-terephthalate, polybutylene-terephthalate, polypentylene-terephthalate, polyhexalene-terephthalate, polyheptadene-terephthalate, polyoctalene-terephthalate, polyethylene-isophthalate, polypropylene-isophthalate, polybutylene-isophthalate, polypentylene-isophthalate, polyhexalene-isophthalate, polyheptadene-isophthalate, polyoctalene-isophthalate, polyethylene-sebacate, polypropylene sebacate, polybutylene-sebacate, polyethylene-adipate, polypropylene-adipate, polybutylene-adipate, polypentylene-adipate, polyhexalene-adipate, polyheptadene-adipate, polyoctalene-adipate, polyethylene-glutarate, polypropylene-glutarate, polybutylene-glutarate, polypentylene-glutarate, polyhexalene-glutarate, polyheptadene-glutarate, polyoctalene-glutarate polyethylene-pimelate, polypropylene-pimelate, polybutylene-pimelate, polypentylene-pimelate, polyhexalene-pimelate, polyheptadene-pimelate, poly(ethoxylated bisphenol A-fumarate), poly(ethoxylated bisphenol A- succinate), poly(ethoxylated bisphenol A-adipate), poly(ethoxylated bisphenol A-glutarate), poly(ethoxylated bisphenol A-terephthalate), poly(ethoxylated bisphenol A-isophthalate), poly(ethoxylated bisphenol A-dodecenylsuccinate), poly(propoxylated bisphenol A-fumarate), poly(propoxylated bisphenol A-succinate), poly(propoxylated bisphenol A-adipate), poly(propoxylated bisphenol A-glutarate), poly(propoxylated bisphenol A-terephthalate), poly(propoxylated bisphenol A-isophthalate), poly(propoxylated bisphenol A-dodecenylsuccinate), SPAR (Dixie Chemicals), BECKOSOL^{®} (Reichhold Inc.), ARAKOTE (Ciba-Geigy Corporation), HETRON^{™} (Ashland Chemical), PARAPLEX^{®} (Rohm & Haas), POLYLITE^{®} (Reichhold Inc.), PLASTHALL^{®} (Rohm & Haas), CELANEX^{®} (Celanese Corporation), RYNITE^{®} (DuPont^{™}), STYPOL^{®} (Polynt Composites, Inc.), and combinations thereof. The resins can also be functionalized, such as carboxylated, sulfonated, or the like, and particularly such as sodio sulfonated, if desired.

The low molecular weight linear amorphous polyester resins are generally prepared by the polycondensation of an organic diol, a diacid or diester, and a polycondensation catalyst. The low molecular weight amorphous resin is generally present in the toner composition in various suitable amounts, such as from about 60 to about 90 weight percent, in embodiments from about 50 to about 65 weight percent, of the toner or of the solids.

Examples of organic diols selected for the preparation of low molecular weight resins include aliphatic diols with from about 2 to about 36 carbon atoms, such as 1,2-ethanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, and the like; alkali sulfo-aliphatic diols such as sodio 2-sulfo-1,2-ethanediol, lithio 2-sulfo-1,2-ethanediol, potassio 2-sulfo-1,2-ethanediol, sodio 2-sulfo-1,3-propanediol, lithio 2-sulfo-1,3-propanediol, potassio 2-sulfo-1,3-propanediol, mixtures thereof, and the like. The aliphatic diol is, for example, selected in an amount of from about 45 to about 50 mole percent of the resin, and the alkali sulfo-aliphatic diol can be selected in an amount of from about 1 to about 10 mole percent of the resin.

Examples of diacid or diesters selected for the preparation of the low molecular weight amorphous polyester include dicarboxylic acids or diesters such as terephthalic acid, phthalic acid, isophthalic acid, fumaric acid, maleic acid, itaconic acid, succinic acid, succinic anhydride, dodecylsuccinic acid, dodecylsuccinic anhydride, dodecenylsuccinic acid, dodecenylsuccinic anhydride, glutaric acid, glutaric anhydride, adipic acid, pimelic acid, suberic acid, azelaic acid, dodecanediacid, dimethyl terephthalate, diethyl terephthalate, dimethylisophthalate, diethylisophthalate, dimethylphthalate, phthalic anhydride, diethylphthalate, dimethyl succinate, dimethylfumarate, dimethylmaleate, dimethylglutarate, dimethyladipate, dimethyl dodecylsuccinate, dimethyl dodecenylsuccinate, and mixtures thereof. The organic diacid or diester is selected, for example, in an amount of from about 45 to about 52 mole percent of the resin.

Examples of suitable polycondensation catalysts for either the low molecular weight amorphous polyester resin or the crystalline resin (described below) include tetraalkyl titanates, dialkyltin oxide such as dibutyltin oxide, tetraalkyltin such as dibutyltin dilaurate, dialkyltin oxide hydroxide such as butyltin oxide hydroxide, aluminum alkoxides, alkyl zinc, dialkyl zinc, zinc oxide, stannous oxide, or mixtures thereof; and which catalysts may be utilized in amounts of, for example, from about 0.01 mole percent to about 5 mole percent based on the starting diacid or diester used to generate the polyester resin.

The low molecular weight amorphous polyester resin may be a branched resin. As used herein, the terms "branched" or "branching" includes branched resin and/or cross-linked resins. Branching agents for use in forming these branched resins include, for example, a multivalent polyacid such as 1,2,4-benzene-tricarboxylic acid, 1,2,4-cyclohexanetricarboxylic acid, 2,5,7-naphthalenetricarboxylic acid, 1,2,4-naphthalenetricarboxylic acid, 1,2,5-hexanetricarboxylic acid, 1,3-dicarboxyl-2-methyl-2-methylene-carboxylpropane, tetra(methylene-carboxyl)methane, and 1,2,7,8-octanetetracarboxylic acid, acid anhydrides thereof, and lower alkyl esters thereof, 1 to about 6 carbon atoms; a multivalent polyol such as sorbitol, 1,2,3,6-hexanetetrol, 1,4-sorbitane, pentaerythritol, dipentaerythritol, tripentaerythritol, sucrose, 1,2,4-butanetriol, 1,2,5- pentatriol, glycerol, 2-methylpropanetriol, 2-methyl-1,2,4-butanetriol, trimethylolethane, trimethylolpropane, 1,3,5-trihydroxymethylbenzene, mixtures thereof, and the like. The branching agent amount selected is, for example, from about 0.1 to about 5 mole percent of the resin.

The resulting unsaturated polyesters are reactive (for example, crosslinkable) on two fronts: (i) unsaturation sites (double bonds) along the polyester chain, and (ii) functional groups such as carboxyl, hydroxy, and the like, groups amenable to acid-base reactions. In embodiments, unsaturated polyester resins are prepared by melt polycondensation or other polymerization processes using diacids and/or anhydrides and diols.

In embodiments, the low molecular weight amorphous polyester resin or a combination of low molecular weight amorphous resins may have a glass transition temperature of from about 30 °C to about 80 °C, in embodiments from about 35 °C to about 70 °C. In further embodiments, the combined amorphous resins may have a melt viscosity of from about 10 to about 1,000,000 Pa*S at about 130 °C, in embodiments from about 50 to about 100,000 Pa*S.

The amount of the low molecular weight amorphous polyester resin in a toner particle of the present disclosure, whether in any core, any shell, or both, may be present in an amount of from 25 to about 50 percent by weight, in embodiments from about 30 to about 45 percent by weight, and in embodiments from about 35 to about 43 percent by weight, of the toner particles (that is, toner particles exclusive of external additives and water).

In embodiments, the toner composition includes at least one crystalline resin. As used herein, "crystalline" refers to a polyester with a three dimensional order. "Semicrystalline resins" as used herein refers to resins with a crystalline percentage of, for example, from about 10 to about 90%, in embodiments from about 12 to about 70%. Further, as used hereinafter, "crystalline polyester resins" and "crystalline resins" encompass both crystalline resins and semicrystalline resins, unless otherwise specified.

In embodiments, the crystalline polyester resin is a saturated crystalline polyester resin or an unsaturated crystalline polyester resin.

The crystalline polyester resins, which are available from a number of sources, may possess various melting points of, for example, from about 30 °C to about 120 °C, in embodiments from about 50 °C to about 90 °C. The crystalline resins may have, for example, a number average molecular weight (Mn), as measured by gel permeation chromatography (GPC) of, for example, from about 1,000 to about 50,000, in embodiments from about 2,000 to about 25,000, in embodiments from about 3,000 to about 15,000, and in embodiments from about 6,000 to about 12,000. The weight average molecular weight (Mw) of the resin is 50,000 or less, for example, from about 2,000 to about 50,000, in embodiments from about 3,000 to about 40,000, in embodiments from about 10,000 to about 30,000, and in embodiments from about 21,000 to about 24,000, as determined by GPC using polystyrene standards. The molecular weight distribution (Mw/Mn) of the crystalline resin is, for example, from about 2 to about 6, in embodiments from about 3 to about 4. The crystalline polyester resins may have an acid value of about 2 to about 20 mg KOH/g, in embodiments from about 5 to about 15 mg KOH/g, and in embodiments from about 8 to about 13 mg KOH/g.

Illustrative examples of crystalline polyester resins may include any of the various crystalline polyesters, such as poly(ethylene-adipate), poly(propylene-adipate), poly(butylene-adipate), poly(pentylene-adipate), poly(hexylene-adipate), poly(octylene-adipate), poly(ethylene-succinate), poly(propylene-succinate), poly(butylene-succinate), poly(pentylene-succinate), poly(hexylene-succinate), poly(octylene-succinate), poly(ethylene-sebacate), poly(propylene-sebacate), poly(butylene-sebacate), poly(pentylene-sebacate), poly(hexylene-sebacate), poly(octylene-sebacate), poly(nonylene-sebacate), poly(decylene-sebacate), poly(undecylene-sebacate), poly(dodecylene-sebacate), poly(ethylene-dodecanedioate), poly(propylene-dodecanedioate), poly(butylene-dodecanedioate), poly(pentylene-dodecanedioate), poly(hexylene-dodecanedioate), poly(octylene-dodecanedioate), poly(nonylene-dodecanedioate), poly(decylene-dodecandioate), poly(undecylene-dodecandioate), poly(dodecylene-dodecandioate), poly(ethylene-fumarate), poly(propylene-fumarate), poly(butylene-fumarate), poly(pentylene-fumarate), poly(hexylene-fumarate), poly(octylene-fumarate), poly(nonylene-fumarate), poly(decylene-fumarate), copoly(5-sulfoisophthaloyl)-copoly(ethylene-adipate), copoly(5-sulfoisophthaloyl)-copoly(propylene-adipate), copoly(5-sulfoisophthaloyl)-copoly(butylene-adipate), copoly(5-sulfo-isophthaloyl)-copoly(pentylene-adipate), copoly(5-sulfo-isophthaloyl)-copoly(hexylene-adipate), copoly(5-sulfo-isophthaloyl)-copoly(octylene-adipate), copoly(5-sulfo-isophthaloyl)-copoly(ethylene-adipate), copoly(5-sulfo-isophthaloyl)-copoly(propylene-adipate), copoly(5-sulfo-isophthaloyl)-copoly(butylene-adipate), copoly(5-sulfo-isophthaloyl)-copoly(pentylene-adipate), copoly(5-sulfo-isophthaloyl)-copoly(hexylene-adipate), copoly(5-sulfo-isophthaloyl)-copoly(octylene-adipate), copoly(5-sulfoisophthaloyl)-copoly(ethylene-succinate), copoly(5-sulfoisophthaloyl)-copoly(propylene-succinate), copoly(5- sulfoisophthaloyl)-copoly(butylene-succinate), copoly(5-sulfoisophthaloyl)-copoly(pentylene-succinate), copoly(5-sulfoisophthaloyl)-copoly(hexylene-succinate), copoly(5-sulfoisophthaloyl)-copoly(octylene-succinate), copoly(5-sulfo-isophthaloyl)-copoly(ethylene-sebacate), copoly(5-sulfo-isophthaloyl)-copoly(propylene-sebacate), copoly(5-sulfo-isophthaloyl)-copoly(butylene-sebacate), copoly(5-sulfo-isophthaloyl)-copoly(pentylene-sebacate), copoly(5-sulfo-isophthaloyl)-copoly(hexylene-sebacate), copoly(5-sulfo-isophthaloyl)-copoly(octylene-sebacate), copoly(5-sulfo-isophthaloyl)-copoly(ethylene-adipate), copoly(5-sulfo-isophthaloyl)-copoly(propylene-adipate), copoly(5-sulfo-isophthaloyl)-copoly(butylene-adipate), copoly(5-sulfo-isophthaloyl)-copoly(pentylene-adipate), copoly(5-sulfo-isophthaloyl)-copoly(hexylene-adipate), and combinations thereof.

The crystalline resin may be prepared by a polycondensation process by reacting suitable organic diol(s) and suitable organic diacid(s) in the presence of a polycondensation catalyst. Generally, a stoichiometric equimolar ratio of organic diol and organic diacid is utilized, however, in some instances, wherein the boiling point of the organic diol is from about 180 °C to about 230 °C, an excess amount of diol can be utilized and removed during the polycondensation process. The amount of catalyst utilized varies, and may be selected in an amount, for example, of from about 0.01 to about 1 mole percent of the resin. Additionally, in place of the organic diacid, an organic diester can also be selected, and where an alcohol byproduct is generated. In further embodiments, the crystalline polyester resin is a poly(dodecandioic acid-co-nonanediol).

Examples of organic diols selected for the preparation of crystalline polyester resins include aliphatic diols with from about 2 to about 36 carbon atoms, such as 1,2-ethanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, and the like; alkali sulfo-aliphatic diols such as sodio 2-sulfo-1,2-ethanediol, lithio 2-sulfo-1,2-ethanediol, potassio 2-sulfo-1,2-ethanediol, sodio 2-sulfo-1,3-propanediol, lithio 2-sulfo-1,3-propanediol, potassio 2-sulfo-1,3-propanediol, mixtures thereof, and the like. The aliphatic diol is, for example, selected in an amount of from about 45 to about 50 mole percent of the resin, and the alkali sulfo-aliphatic diol can be selected in an amount of from about 1 to about 10 mole percent of the resin.

Examples of organic diacids or diesters selected for the preparation of the crystalline polyester resins include oxalic acid, succinic acid, glutaric acid, adipic acid, suberic acid, azelaic acid, sebacic acid, phthalic acid, isophthalic acid, terephthalic acid, napthalene-2,6-dicarboxylic acid, naphthalene-2,7-dicarboxylic acid, cyclohexane dicarboxylic acid, malonic acid and mesaconic acid, a diester or anhydride thereof; and an alkali sulfo-organic diacid such as the sodio, lithio or potassium salt of dimethyl-5-sulfo-isophthalate, dialkyl-5-sulfoisophthalate-4-sulfo-1,8-naphthalic anhydride, 4-sulfo-phthalic acid, dimethyl-4-sulfophthalate, dialkyl-4-sulfo-phthalate, 4-sulfophenyl-3,5-dicarbomethoxybenzene, 6-sulfo-2-naphthyl-3,5-dicarbomethoxybenzene, sulfo-terephthalic acid, dimethyl-sulfo-terephthalate, 5-sulfo-isophthalic acid, dialkyl-sulfo-terephthalate, sulfo-p-hydroxybenzoic acid, N,N-bis(2-hydroxyethyl)-2-amino ethane sulfonate, or mixtures thereof. The organic diacid is selected in an amount of, for example, from about 40 to about 50 mole percent of the resin, and the alkali sulfoaliphatic diacid can be selected in an amount of from about 1 to about 10 mole percent of the resin.

Suitable crystalline polyester resins include those disclosed in U.S. Patent No. 7,329,476 and U.S. Patent Application Pub. Nos. 2006/0216626, 2008/0107990, 2008/0236446 and 2009/0047593, each of which is hereby incorporated by reference herein in their entirety. In embodiments, a suitable crystalline resin may include a resin composed of ethylene glycol or nonanediol and a mixture of dodecanedioic acid and fumaric acid comonomers with the following formula (II): 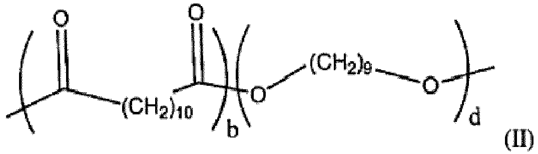 wherein b is from about 5 to about 2000, and d is from about 5 to about 2000.

If semicrystalline polyester resins are employed herein, the semicrystalline resin may include poly(3-methyl-1-butene), poly(hexamethylene carbonate), poly(ethylene-p-carboxy phenoxy-butyrate), poly(ethylene-vinyl acetate), poly(docosyl acrylate), poly(dodecyl acrylate), poly(octadecyl acrylate), poly(octadecyl methacrylate), poly(behenylpolyethoxyethyl methacrylate), poly(ethylene adipate), poly(decamethylene adipate), poly(decamethylene azelaate), poly(hexamethylene oxalate), poly(decamethylene oxalate), polyethylene oxide), polypropylene oxide), poly(butadiene oxide), poly(decamethylene oxide), poly(decamethylene sulfide), poly(decamethylene disulfide), poly(ethylene sebacate), poly(decamethylene sebacate), poly(ethylene suberate), poly(decamethylene succinate), poly(eicosamethylene malonate), poly(ethylene-p-carboxy phenoxy-undecanoate), poly(ethylene dithionesophthalate), poly(methyl ethylene terephthalate), poly(ethylene-p-carboxy phenoxy-valerate), poly(hexamethylene-4,4,-oxydibenzoate), poly(10-hydroxy capric acid), poly(isophthalaldehyde), poly(octamethylene dodecanedioate), poly(dimethyl siloxane), poly(dipropyl siloxane), poly(tetramethylene phenylene diacetate), poly(tetramethylene trithiodicarboxylate), poly(trimethylene dodecane dioate), poly(m-xylene), poly(p-xylylene pimelamide), and combinations thereof.

In embodiments, the resin for the present toner is a propoxylated bisphenol A fumaric acid. In further embodiments, the resin comprises a combination of a propoxylated bisphenol A fumaric acid resin and a gel resin made by crosslinking the propoxylated bisphenol A fumaric acid. In embodiments, the resin includes a propoxylated bisphenol A fumaric acid resin having a weight average molecular weight (Mw) of 12000 to 14000 as determined by GPC using polystyrene standards and a gel resin made by crosslinking the propoxylated bisphenol A fumaric acid, in embodiments, wherein the gel resin is present in an amount of about 10 to about 30 percent by weight based upon the total weight of the resins.

The white pulverized toner includes a BaSO₄ pigment. Any suitable or desired BaSO₄ pigment may be selected.

As used herein, the term "median particle size" refers to a diameter where half of the population resides above this point, and half resides below this point (on a number distribution basis unless otherwise specified). Median particle size may also be referred to as the "Dn50."

Particle size can be measured by image analysis on micrographs taken using microscopy techniques such as SEM (scanning electron microscopy) or TEM (transmission electron microscopy). Microscopy and image analysis techniques report results as a number distribution of the particles. Particle size measurements can also be determined by dynamic light scattering or laser diffraction using a Nanotrac 252 instrument (from Microtrac, Inc.). Light scattering and laser diffraction techniques report results as a volume distribution of the particles. Particle size results from number distribution can be easily transformed to a volume distribution, and vice versa using methods known to those skilled in the art.

As disclosed herein, number distribution is measured with the diameter of the particle being measured along the longest axis. For example, number distribution is measured for an ellipse shape particle along the longest (or major) axis.

In embodiments, median values are defined as the value where half of the population resides above this point, and half resides below this point. For particle size distributions, the median is called the D50 (or x50 when following certain ISO guidelines). The D50 is the size that splits the distribution with half above and half below this diameter. The Dv50 (or Dv0.5) is the median for a volume distribution, Dn50 is used for number distributions, and Ds50 is used for surface distributions. Since the primary result from microscopy/image analysis is a number distribution, the D50 cited herein is the number median referred to as Dn50 herein. For further information, see "A Guidebook To Particle Size Analysis," Horiba Scientific, Copyright 2019, which is hereby incorporated by reference herein in its entirety.

In embodiments herein, Dn50 is defined as the particle size value at which 50% of the particle population resides below this value, wherein particle size is measured using microscopy/image analysis techniques and the particle size distribution is reported as a number distribution.

In embodiments herein, Dn10 is defined as the particle size value at which 10% of the particle population resides below this value, wherein particle size is measured using microscopy/image analysis techniques and the particle size distribution is reported as a number distribution.

In embodiments herein, Dn90 is defined as the particle size value at which 90% of the particle population resides below this value, wherein particle size is measured using microscopy/image analysis techniques and the particle size distribution is reported as a number distribution.

In embodiments herein, the particle size distribution width or "span" is defined as Span = (Dn90-Dn10) / (Dn50), wherein particle size is measured using microscopy/image analysis techniques and the particle size distribution is reported as a number distribution.

The conventional wisdom for toner particle preparation is to use a pigment having a narrow particle size distribution. Usual toner practice is to use a pigment having a narrow particle size distribution which disperses better and enables use of less pigment. Contrary to such conventional wisdom, the present toners employ a BaSO₄ pigment having a wide particle size distribution.

In embodiments, the white toner herein comprises a BaSO₄ pigment, wherein a particle size is defined as Span = (Dn90-Dn10) / (Dn50); and wherein the BaSO₄ pigment has a wide particle size distribution wherein the Span is 0.75 or greater. In certain embodiments, the toner includes a single pigment which is the BaSO₄ pigment having a wide particle size distribution, and wherein the toner does not contain any other pigments. Thus, in a specific embodiment, the toner comprises a pigment, wherein the pigment consists essentially of a BaSO₄ pigment having a wide particle size distribution, in embodiments, wherein a particle size is defined as Span = (Dn90-Dn10) / (Dn50); and wherein the single BaSO₄ pigment has a wide particle size distribution wherein the Span is 0.75 or greater. In this embodiment, wherein the toner comprises a single pigment consisting essentially of the BaSO₄ pigment having a wide particle size distribution, it is meant that the toner is free of, that is, does not contain, any other pigment. Thus, the toner herein provides a white toner enabling a desired high L* whiteness using a BaSO₄ pigment, where the BaSO₄ pigment has a wide particle size distribution, in embodiments, using a single BaSO₄ pigment and wherein the toner is free of other pigments, and further wherein the toner is free of TiO₂. In embodiments, the white toner herein achieves high L* whiteness at less BaSO₄ pigment loading (10-35 %) than previous white toners employing TiO₂ (about 45%).

In a specific embodiment, the BaSO₄ pigment selected has a median particle size Dn50 of about 400 nanometers. With diameter of the particle meaning the diameter measured along with longest axis, in embodiments along the longest axis of a particle having a generally ellipse shape, in embodiments, the Dn50 median particle diameter of the BaSO₄ pigment is about 400 nanometers. In embodiments, the Dn10 particle diameter of the BaSO₄ pigment is about 150 nanometers. In embodiments, the Dn90 particle diameter of the BaSO₄ pigment is about 550 nanometers. In embodiments, the particle size distribution width or "span" is 1.

In a specific embodiment, the BaSO₄ pigment selected has a median particle size Dn50 of about 400 nanometers. With diameter of the particle meaning the diameter measured along with longest axis, in embodiments along the longest axis of a particle having a generally ellipse shape, in embodiments, the Dn50 median particle diameter of the BaSO₄ pigment is about 400 nanometers. In embodiments, the Dn10 particle diameter of the BaSO₄ pigment is about 250 nanometers. In embodiments, the Dn90 particle diameter of the BaSO₄ pigment is about 550 nanometers. In embodiments, the particle size distribution width or "span" is 0.75.

The particle size distribution width or span values for the BaSO₄ pigment particles indicate that the particles are made to have a very wide particle size distribution. A wide particle size distribution width or span of greater than 0.75 can significantly enhance the overall solar reflectance compared to a uniform particle size distribution. For further detail, regarding particle size distribution of BaSO₄ pigments, see . See Li, et al., "Ultrawhite BaSO4 Paints and Films For Remarkable Daytime Subambient Radiative Cooling," ACS Appl. Mater. Interfaces 2021, 13, 21733-21739, incorporated by reference herein above. Paint is applied with a brush and has a thick liquid consistency. As mentioned hereinabove, it is known in the toner art to require a pigment having a narrow particle size distribution. Toners, in contrast to paint, require characteristics such as flow, charging behavior, stability, transfer behavior, which enable the toner to function in a printing device. In a toner, the pigment is part of the toner particle comprising resin, optional wax, and other optional ingredients. Usual toner practice is to use a pigment having a narrow particle size distribution in order to achieve the necessary toner behavior for functioning in the printing device.

In embodiments, the BaSO₄ particles herein have a wide particle size distribution. In embodiments, BaSO₄ particles are selected which are characterized by SEM (Scanning Electron Micrography) to have a particle size distribution with Dn50=400 nm, Dn10=250 nm and Dn90=550 nm and a span of 0.75

In embodiments, BaSO₄ particles are selected which are characterized by SEM (Scanning Electron Micrography) to have a particle size distribution with Dn50=400 nm, Dn10=150 nm and Dn90=550 nm, and a span of 1.0.

In embodiments, the BaSO₄ pigment has a particle size (diameter, longest axis) of from about 268 to about 528 nanometers.

The BaSO₄ pigment can be present in the toner particle in any suitable or desired amount. In embodiments, the BaSO₄ pigment is present in the toner particle in an amount of from about 10 percent to about 35 percent by weight based upon the total weight of the toner particles (that is, the total weight of all of the toner particle ingredients not including external additives).

Optionally, a wax may also be combined with the resin in forming toner particles. When included, the wax may be present in any suitable or desired amount, in embodiments, in an amount of, for example, from about 1 weight percent to about 25 weight percent of the toner particles, in embodiments from about 5 weight percent to about 20 weight percent of the toner particles.

Waxes that may be selected include waxes having, for example, a weight average molecular weight of from about 500 to about 20,000, in embodiments from about 1,000 to about 10,000. Waxes that may be used include, for example, polyolefins such as polyethylene, polypropylene, and polybutene waxes such as commercially available from Allied Chemical and Petrolite Corporation, for example POLYWAX^{™} polyethylene waxes from Baker Petrolite, wax emulsions available from Michaelman, Inc. and the Daniels Products Company, EPOLENE N-15^{™} commercially available from Eastman Chemical Products, Inc., and VISCOL 550-P^{™}, a low weight average molecular weight polypropylene available from Sanyo Kasei K. K.; plant- based waxes, such as carnauba wax, rice wax, candelilla wax, sumacs wax, and jojoba oil; animal-based waxes, such as beeswax; mineral-based waxes and petroleum-based waxes, such as montan wax, ozokerite, ceresin, paraffin wax, microcrystalline wax, and Fischer-Tropsch wax; ester waxes obtained from higher fatty acid and higher alcohol, such as stearyl stearate and behenyl behenate; ester waxes obtained from higher fatty acid and monovalent or multivalent lower alcohol, such as butyl stearate, propyl oleate, glyceride monostearate, glyceride distearate, and pentaerythritol tetra behenate; ester waxes obtained from higher fatty acid and multivalent alcohol multimers, such as diethyleneglycol monostearate, dipropyleneglycol distearate, diglyceryl distearate, and triglyceryl tetrastearate; sorbitan higher fatty acid ester waxes, such as sorbitan monostearate, and cholesterol higher fatty acid ester waxes, such as cholesteryl stearate. Examples of functionalized waxes that may be used include, for example, amines, amides, for example AQUA SUPERSLIP 6550^{™}, SUPERSLIP 6530^{™} available from Micro Powder Inc., fluorinated waxes, for example POLYFLUO 190^{™}, POLYFLUO 200^{™}, POLYSILK 19^{™}, POLYSILK 14^{™} available from Micro Powder Inc., mixed fluorinated, amide waxes, for example MICROSPERSION 19^{™} also available from Micro Powder Inc., imides, esters, quaternary amines, carboxylic acids or acrylic polymer emulsion, for example JONCRYL 74^{™}, 89^{™}, 130^{™}, 537^{™}, and 538^{™}, all available from SC Johnson Wax, and chlorinated polypropylenes and polyethylenes available from Allied Chemical and Petrolite Corporation and SC Johnson wax. Mixtures and combinations of the foregoing waxes may also be used in embodiments. Waxes may be included as, for example, fuser roll release agents.

The toner may include positive or negative charge control agents, for example in an amount from about 0.1 to about 10 weight percent of the toner, in embodiments from about 1 to about 3 weight percent of the toner. Examples of suitable charge control agents include quaternary ammonium compounds inclusive of alkyl pyridinium halides; bisulfates; alkyl pyridinium compounds, including those disclosed in U.S. Patent No. 4,298,672, the disclosure of which is hereby incorporated by reference herein in its entirety; organic sulfate and sulfonate compositions, including those disclosed in U.S. Patent No. 4,338,390, the disclosure of which is hereby incorporated by reference in its entirety; cetyl pyridinium tetrafluoroborates; distearyl dimethyl ammonium methyl sulfate; aluminum salts such as BONTRON E84^{™} or E88^{™} (Orient Chemical Industries, Ltd.); combinations thereof, and the like.

There can also be blended with the toner particles external additive particles after formation including flow aid additives, which additives may be present on the surface of the toner particles. Examples of these additives include metal oxides such as titanium oxide, silicon oxide, aluminum oxides, cerium oxides, tin oxide, mixtures thereof, and the like; colloidal and amorphous silicas, such as AEROSIL^{®}, metal salts and metal salts of fatty acids inclusive of zinc stearate, calcium stearate, or long chain alcohols such as UNILIN^{™} 700, and mixtures thereof. In embodiments, the toners herein further comprise cleaning additives selected from the group consisting of stearates, cerium oxide, strontium titanate, and combinations thereof.

In general, silica may be applied to the toner surface for toner flow, triboelectric charge enhancement, admix control, improved development and transfer stability, and higher toner blocking temperature. Titania may be applied for improved relative humidity (RH) stability, triboelectric charge control and improved development and transfer stability. Zinc stearate, calcium stearate and/or magnesium stearate may optionally also be used as an external additive for providing lubricating properties, developer conductivity, triboelectric charge enhancement, enabling higher toner charge and charge stability by increasing the number of contacts between toner and carrier particles. In embodiments, a commercially available zinc stearate known as Zinc Stearate L, obtained from Ferro Corporation, may be used. The external surface additives may be used with or without a coating.

In embodiments, the toner further comprises a member of the group consisting of a silica surface additive, a titania surface additive, and combinations thereof. In embodiments, the toner comprises a silica additive, a titania additive, or a combination thereof, and at least one of the silica or titania additives has a hydrophobic treatment, in embodiments, one or more of the silica or titania additives has a polydimethylsiloxane hydrophobic treatment.

Each of these external additives may be present in an amount from about 0 weight percent to about 3 weight percent of the toner, in embodiments from about 0.25 weight percent to about 2.5 weight percent of the toner, although the amount of additives can be outside of these ranges. In embodiments, the toners may include, for example, from about 0 weight percent to about 3 weight percent titania, from about 0 weight percent to about 3 weight percent silica, and from about 0 weight percent to about 3 weight percent zinc stearate.

In embodiments, the toner comprises a surface additive comprising a member selected from the group consisting of silica, titanium dioxide, zinc stearate, and mixtures thereof. In certain embodiments, the toner is free of titanium dioxide.

In embodiments, a method for preparing a white pulverized toner herein comprises: mixing a resin; a BaSO₄ pigment, wherein a particle size is defined as Span = (Dn90-Dn10) / (Dn50), and wherein the BaSO₄ pigment has a wide particle size distribution wherein the Span is 0.75 or greater; an optional wax, and an optional internal additive to form a mixture; melting and extruding the mixture to form a melt-kneaded product; pulverizing the melt-kneaded product to form white toner particles; optionally, classifying the white toner particles; and optionally, disposing one or more surface additives onto the white toner particles.

In embodiments, toner compositions may be prepared by emulsion-aggregation processes, such as a process that includes aggregating a mixture of an optional wax and any other desired or required additives, and emulsions including the resins described above, optionally in surfactants as described above, and then coalescing the aggregate mixture. A mixture may be prepared by adding an optional wax or other materials, which may also be optionally in a dispersion(s) including a surfactant, to the emulsion, which may be a mixture of two or more emulsions containing the resin. The pH of the resulting mixture may be adjusted by an acid such as, for example, acetic acid, nitric acid or the like. In embodiments, the pH of the mixture may be adjusted to from about 2 to about 4.5. Additionally, in embodiments, the mixture may be homogenized. If the mixture is homogenized, homogenization may be accomplished by mixing at about 4,000 to about 6,000 revolutions per minute. Homogenization may be accomplished by any suitable means, including, for example, an IKA ULTRA TURRAX^{®} T50 probe homogenizer.

Following the preparation of the above mixture, an aggregating agent may be added to the mixture. Any suitable aggregating agent may be utilized to form a toner. Suitable aggregating agents include, for example, aqueous solutions of a divalent cation or a multivalent cation material. The aggregating agent may be, for example, polyaluminum halides such as polyaluminum chloride (PAC), or the corresponding bromide, fluoride, or iodide, polyaluminum silicates such as polyaluminum sulfosilicate (PASS), and water soluble metal salts including aluminum chloride, aluminum nitrite, aluminum sulfate, potassium aluminum sulfate, calcium acetate, calcium chloride, calcium nitrite, calcium oxylate, calcium sulfate, magnesium acetate, magnesium nitrate, magnesium sulfate, zinc acetate, zinc nitrate, zinc sulfate, zinc chloride, zinc bromide, magnesium bromide, copper chloride, copper sulfate, and combinations thereof. In embodiments, the aggregating agent may be added to the mixture at a temperature that is below the glass transition temperature (Tg) of the resin.

The aggregating agent may be added to the mixture utilized to form a toner in an amount of, for example, from about 0.1 % to about 8% by weight, in embodiments from about 0.2% to about 5% by weight, in other embodiments from about 0.5% to about 5% by weight, of the resin in the mixture. This provides a sufficient amount of agent for aggregation.

In order to control aggregation and coalescence of the particles, in embodiments the aggregating agent may be metered into the mixture over time. For example, the agent may be metered into the mixture over a period of from about 5 to about 240 minutes, in embodiments from about 30 to about 200 minutes. The addition of the agent may also be done while the mixture is maintained under stirred conditions, in embodiments from about 50 rpm to about 1,000 rpm, in other embodiments from about 100 rpm to about 500 rpm, and at a temperature that is below the glass transition temperature of the resin as discussed above, in embodiments from about 30 °C to about 90 °C, in embodiments from about 35 °C to about 70 °C.

The particles may be permitted to aggregate until a predetermined desired particle size is obtained. A predetermined desired size refers to the desired particle size to be obtained as determined prior to formation, and the particle size being monitored during the growth process until such particle size is reached. Samples may be taken during the growth process and analyzed, for example with a Coulter Counter, for average particle size. The aggregation thus may proceed by maintaining the elevated temperature, or slowly raising the temperature to, for example, from about 40 °C to about 100 °C, and holding the mixture at this temperature for a time from about 0.5 hours to about 6 hours, in embodiments from about hour 1 to about 5 hours, while maintaining stirring, to provide the aggregated particles. Once the predetermined desired particle size is reached, then the growth process is halted. In embodiments, the predetermined desired particle size is within the toner particle size ranges mentioned above.

The growth and shaping of the particles following addition of the aggregation agent may be accomplished under any suitable conditions. For example, the growth and shaping may be conducted under conditions in which aggregation occurs separate from coalescence. For separate aggregation and coalescence stages, the aggregation process may be conducted under shearing conditions at an elevated temperature, for example of from about 40 °C to about 90 °C, in embodiments from about 45 °C to about 80 °C, which may be below the glass transition temperature of the resin as discussed above.

In embodiments, after aggregation, but prior to coalescence, a shell may be applied to the aggregated particles.

Resins which may be utilized to form the shell include, but are not limited to, the amorphous resins described above, and my include the resin or resins used in the core. Such an amorphous resin may be a low molecular weight resin, a high molecular weight resin, or combinations thereof. In embodiments, an amorphous resin which may be used to form a shell in accordance with the present disclosure may include an amorphous polyester of formula I above.

In some embodiments, the amorphous resin utilized to form the shell may be crosslinked. For example, crosslinking may be achieved by combining an amorphous resin with a crosslinker, sometimes referred to herein, in embodiments, as an initiator. Examples of suitable crosslinkers include, but are not limited to, for example free radical or thermal initiators such as organic peroxides and azo compounds described above as suitable for forming a gel in the core. Examples of suitable organic peroxides include diacyl peroxides such as, for example, decanoyl peroxide, lauroyl peroxide and benzoyl peroxide, ketone peroxides such as, for example, cyclohexanone peroxide and methyl ethyl ketone, alkyl peroxyesters such as, for example, t-butyl peroxy neodecanoate, 2,5-dimethyl 2,5-di(2-ethyl hexanoyl peroxy) hexane, t-amyl peroxy 2-ethyl hexanoate, t-butyl peroxy 2-ethyl hexanoate, t-butyl peroxy acetate, t-amyl peroxy acetate, t-butyl peroxy benzoate, t-amyl peroxy benzoate, oo-t-butyl o-isopropyl mono peroxy carbonate, 2,5-dimethyl 2,5-di(benzoyl peroxy) hexane, oo-t-butyl o-(2-ethyl hexyl) mono peroxy carbonate, and oo-t-amyl o-(2-ethyl hexyl) mono peroxy carbonate, alkyl peroxides such as, for example, dicumyl peroxide, 2,5-dimethyl 2,5-di(t-butyl peroxy) hexane, t-butyl cumyl peroxide, α-α-bis(t-butyl peroxy) diisopropyl benzene, di-t-butyl peroxide and 2,5-dimethyl 2,5di(t-butyl peroxy) hexyne-3, alkyl hydroperoxides such as, for example, 2,5-dihydro peroxy 2,5-dimethyl hexane, cumene hydroperoxide, t-butyl hydroperoxide and t-amyl hydroperoxide, and alkyl peroxyketals such as, for example, n-butyl 4,4-di(t-butyl peroxy) valerate, 1,1-di(t-butyl peroxy) 3,3,5-trimethyl cyclohexane, 1,1-di(t-butyl peroxy) cyclohexane, 1,1-di(t-amyl peroxy) cyclohexane, 2,2-di(t-butyl peroxy) butane, ethyl 3,3-di(t-butyl peroxy) butyrate and ethyl 3,3-di(t-amyl peroxy) butyrate, and combinations thereof. Examples of suitable azo compounds include 2,2,'-azobis(2,4-dimethylpentane nitrile), azobis-isobutyronitrile, 2,2,-azobis (isobutyronitrile), 2,2,-azobis(2,4-dimethyl valeronitrile), 2,2'-azobis (methyl butyronitrile), 1,1'-azobis(cyano cyclohexane), other similar known compounds, and combinations thereof.

The crosslinker and amorphous resin may be combined for a sufficient time and at a sufficient temperature to form the crosslinked polyester gel. In embodiments, the crosslinker and amorphous resin may be heated to a temperature of from about 25 °C to about 99 °C, in embodiments from about 30 °C to about 95 °C, for a period of time from about 1 minute to about 10 hours, in embodiments from about 5 minutes to about 5 hours, to form a crosslinked polyester resin or polyester gel suitable for use as a shell.

Where utilized, the crosslinker may be present in an amount of from about 0.001% by weight to about 5% by weight of the resin, in embodiments from about 0.01% by weight to about 1% by weight of the resin. The amount of CCA may be reduced in the presence of crosslinker or initiator.

A single polyester resin may be utilized as the shell or, in embodiments a first polyester resin may be combined with other resins to form a shell. Multiple resins may be utilized in any suitable amounts. In embodiments, a first amorphous polyester resin, for example a low molecular weight amorphous resin of formula I above, may be present in an amount of from about 20 percent by weight to about 100 percent by weight of the total shell resin, in embodiments from about 30 percent by weight to about 90 percent by weight of the total shell resin. Thus, in embodiments a second resin, in embodiments a high molecular weight amorphous resin, may be present in the shell resin in an amount of from about 0 percent by weight to about 80 percent by weight of the total shell resin, in embodiments from about 10 percent by weight to about 70 percent by weight of the shell resin.

Following aggregation to the desired particle size and application of any optional shell, the particles may then be coalesced to the desired final shape, the coalescence being achieved by, for example, heating the mixture to a temperature from about 45 °C to about 100 °C, in embodiments from about 55 °C to about 99 °C, which may be at or above the glass transition temperature of the resins utilized to form the toner particles, and/or reducing the stirring, for example to from about 100 rpm to about 400 rpm, in embodiments from about 200 rpm to about 300 rpm. The fused particles can be measured for shape factor or circularity, such as with a SYSMEX FPIA 3000 analyzer, until the desired shape is achieved.

Coalescence may be accomplished over a period of time from about 0.01 to about 9 hours, in embodiments from about 0.1 to about 4 hours.

In embodiments, after aggregation and/or coalescence, the pH of the mixture may then be lowered to from about 3.5 to about 6 and, in embodiments, to from about 3.7 to about 5.5 with, for example, an acid, to further coalesce the toner aggregates. Suitable acids include, for example, nitric acid, sulfuric acid, hydrochloric acid, citric acid and/or acetic acid. The amount of acid added may be from about 0.1 to about 30 percent by weight of the mixture, and in embodiments from about 1 to about 20 percent by weight of the mixture.

The mixture may be cooled, washed and dried. Cooling may be at a temperature of from about 20 °C to about 40 °C, in embodiments from about 22 °C to about 30 °C, over a period of time of from about 1 hour to about 8 hours, in embodiments from about 1.5 hours to about 5 hours.

In embodiments, the slurry may be passed through at least one heat exchanger to quench the temperature of the slurry after coalescence. After coalescence, the mixture may be quenched to below the glass transition temperature of the resin, such as a temperature below about 40 °C. The cooling may be rapid or slow, as desired. A suitable cooling method may include introducing cold water to a jacket around at least one heat exchanger to quench.

Subsequently, the toner slurry may be washed. The washing may be carried out at a pH of from about 7 to about 12, in embodiments at a pH of from about 9 to about 11. The washing may be at a temperature of from about 30 °C to about 70 °C, in embodiments from about 40 °C to about 67 °C. The washing may include filtering and reslurrying a filter cake including toner particles in deionized water. The filter cake may be washed one or more times by deionized water, or washed by a single deionized water wash at a pH of about 4 wherein the pH of the slurry is adjusted with an acid, and followed optionally by one or more deionized water washes.

Drying may be carried out at a temperature of from about 35 °C to about 75 °C, and in embodiments of from about 45 °C to about 60 °C. The drying may be continued until the moisture level of the particles is below a set target of about 1% by weight, in embodiments of less than about 0.7% by weight.

In embodiments, an emulsion aggregation toner process herein comprises: obtaining a latex of at least one resin; obtaining an aqueous dispersion of a BaSO4 pigment, wherein a particle size is defined as Span = (Dn90-Dn10) / (Dn50), and wherein the BaSO₄ pigment has a wide particle size distribution wherein the Span is 0.75 or greater; optionally, obtaining an aqueous dispersion of an optional wax; forming a mixture of the latex of at least one resin, the aqueous dispersion of the BaSO4 pigment, and the aqueous dispersion of the optional wax; heating the mixture to a first temperature; maintaining the first temperature to form aggregated toner particles; adding a latex of shell resin to form a shell over the aggregated particles; optionally, adding a solution of a chelating agent; stopping further aggregation and raising the temperature to a second temperature that is higher than the first temperature to coalesce the aggregated particles; cooling, optionally washing, optionally drying, and recovering the emulsion aggregation toner particles.

In embodiments, the process further comprises combining the emulsion aggregation toner particles with a toner carrier to form a developer.

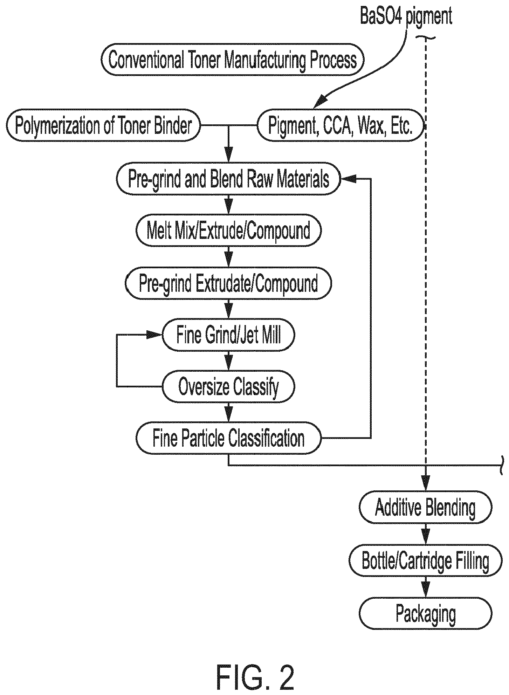

Figure 2 provides a flow chart illustrating a conventional toner manufacturing process for preparing a white pulverized toner in accordance with the present embodiments. The process may include step of polymerizing the toner binder resin or resins. This step may alternately include providing one or more already prepared toner binder resins. The process includes providing a BaSO₄ pigment, optional internal additives such as charge control agents, wax, and any other ingredient that will be part of the toner particle. The toner binder resin or resins, BaSO₄ pigment, optional wax, and optional internal additives are subjected to a pre-grind and blend of the raw materials. The raw materials are melt mixed and extruded to form a melt-mixed or melt-kneaded product or compound. The melt-kneaded compound is pulverized. Pulverizing can include subjecting the melt-mixed extruded compound to a pre-grind to form a pre-ground extrudate or pre-ground compound. The pre-ground compound can then be subjected to a fine grind such as in a jet mill to provide initial toner particles. The initial toner particles can be classified to isolate oversized toner particles and further subjected to a fine particle classification after which white pulverized toner particles of the desired size are obtained. The white pulverized toner particles can be subjected to additive blending to apply one or more surface additives to the white pulverized toner particles. The white pulverized toner particles can then be packaged such as disposed in a bottled or filled into a cartridge and then further provided with any additional packaging as desired and known in the toner field.

In embodiments, the present toners provide a printed image having certain unique L* a* b* values. The CIELAB color space (also known as CIE L*a*b* or sometimes abbreviated as simply "Lab" color space) is a color space defined by the International Commission on Illumination (CIE) in 1976. It expresses color as three values: L* for the lightness from black (0) to white (100), a* from green (-) to red (+), and b* from blue (-) to yellow (+).

Because three parameters are measured, the space itself is a three-dimensional real number space, which allows for infinitely many possible colors. In practice, the space is usually mapped onto a three-dimensional integer space for digital representation, and thus the L*, a*, and b* values are usually absolute, with a pre-defined range. The lightness value, L*, represents the darkest black at L* = 0, and the brightest white at L* = 100. The color channels, a* and b*, represent true neutral gray values at a* = 0 and b* = 0. The a* axis represents the green-red component, with green in the negative direction and red in the positive direction. The b* axis represents the blue-yellow component, with blue in the negative direction and yellow in the positive direction. The scaling and limits of the a* and b* axes will depend on the specific implementation, but they often run in the range of ±100 or -128 to +127 (signed 8-bit integer). For further information, see the online encyclopedia, Wikipedia, at https://en.wikipedia.org/wiki/CIELAB_color_space.

Two settings that are typically used with the X-Rite ILS to measure Lab values are M0 (white light and undefined UV) and M1 (white light and defined UV). M0 is most commonly used for assessing base color. M1 is most commonly used for assessing a measure of fluorescence. a^{∗} defines the greenish hue in the toner formulation. In embodiments, the present toner provides the following values when measured using the X-Rite ILS in M0 and M1 settings:

**Table 1**

| | L* | a* | b* |
|---|---|---|---|
| X-Rite ILS M0 | > 90 | -20 to -30 | > 75 |
| X-Rite ILS M1 | > 95 | -30 to -40 | >75 |

### EXAMPLES

The following Examples are being submitted to further define various species of the present disclosure. These Examples are intended to be illustrative only and are not intended to limit the scope of the present disclosure. Also, parts and percentages are by weight unless otherwise indicated.

### Example 1

A prophetic example illustrating production of white pulverized toner particles. Conventional toner process steps are described in U.S. Patent 9,964,883, incorporated by reference herein above, and such steps may be selected for the present toner and toner process. Raw materials are extruded in an extruder such as a ZSK-25 extruder. The mix includes various amounts of propoxylated bisphenol A fumaric acid resin having a molecular weight (Mw) of about 13000 pse (polystyrene equivalent) and 20 weight percent of a gel resin prepared by crosslinking a propoxylated bisphenol A fumaric acid resin. Various amounts of white BaSO₄ pigment is included in the mix. The pigment can be a BLANC FIXE^{™} treated BaSO₄ commercially available from VENATOR. The purchased BaSO₄ particles were characterized by SEM (scanning electron micrography) to have a particle size distribution width of Dn50=400 nm, Dn10=250 nm and Dn90=550 nm. In embodiments, a Dn50 median particle size with diameter of the particle measured along the longest axis is 400 nm. Pigment levels of 10 percent to 35 percent are selected. The resulting extrudates can be pulverized in a 200 AFG fluid bed jet mill to a target median size of 7.6 micrometers. The target particle size is selected to enable a mean size of about 8.3 micrometers after removing the excess fines content. 0.3 percent TS530 silica is added during the pulverization process as a flow aid. The particles are classified in a B18 Tandem Acucut system.

Thus, a white toner is provided, in embodiments, a conventional (pulverized) non-emulsion aggregation toner comprising BaSO₄, which is a non-toxic pigment that can meet potential future regulatory requirements for pigment such as to replace TiO₂. Further, a white toner is provided comprising BaSO₄ which enables higher L* whiteness and opacity at lower pigment loadings than previously available with prior pigments such as TiO₂.

### Example 2

A prophetic example illustrating production of white emulsion aggregation toner particles. Into a two liter plastic container is added 200 grams of dry BaSO₄, 13.33 grams of Calfax^{®} (diphenyl oxide disulfonate anionic surfactant available from Pilot Chemical Company), and 1,005.77 grams of water. This solution is then put under a homogenizer at 3,000 rpm (revolutions per minute), and samples are tested with a Nanotrac 252 instrument (from Microtrac, Inc.) to determine when the pigment particles are dispersed down to the primary particle size. Into a four liter plastic container is added 1,211.765 grams of well mixed BaSO₄ pigment dispersion, along with 159.735 grams of high Mw amorphous polyester resin emulsion (prepared from an amorphous polyester resin in an emulsion, having an average molecular weight (Mw) of about 86,000, a number average molecular weight (Mn) of about 5,600, an onset glass transition temperature (Tg onset) of about 56°C, particle size approximately 70 nm (nanometers) and about 35% solids of composition terpoly-(propoxylated bisphenol A-terephthalate) terpoly-(propoxylated bisphenol A-dodecenylsuccinate) terpoly-(propoxylated bisphenol A fumarate), 161.706 grams of low Mw polyester amorphous resin emulsion (prepared from an amorphous polyester resin in an emulsion having an Mw of about 19,400, an Mn of about 5,000, a Tg onset of about 60°C, particle size approximately 170 - 230 nm and about 35% solids of composition terpoly-(propoxylated bisphenol A-terephthalate) terpoly-(propoxylated bisphenol A-dodecenylsuccinate) terpoly-(propoxylated bisphenol A fumarate) ), 110.505 grams of crystalline resin emulsion (a crystalline polyester resin comprising polyester made from dodecanedioic acid and 1,9-nonanediol), and 1,057.855 grams of water. This mixture is then pH adjusted to 4.2 using 52.10 grams of 0.3M HNO₃ acid. Separately, a solution of 8.977 grams Al₂(SO₄)₃ (27.85 weight percent) and 110.712 grams of water is added in as a flocculent under homogenization at 3,500 rpm. The mixture is then added into a four liter stainless steel reactor equipped with an overhead mixer, and stirred at 200 rpm as the mixture is heated to 48 °C. When the temperature of the mixture reaches steady state, the rpm is increased to 400 and particle size is monitored with a Coulter Counter until the core particles reach a volume average particle size of 5.316 micrometers, a GSD volume of 1.233, and a GSD number of 1.419. A shell material containing 177.483 grams and 179.673 grams of the above-mentioned high Mw and low Mw polyester resin emulsions and 202.844 grams of water was pH adjusted to 3.3 using 45.02 grams of 0.3M HNO₃ and added to the reaction slurry as the rpm of the overhead mixer was gradually decreased to 220. This results in a core-shell structured particle with an average size of 7.579 micrometers, a GSD volume of 1.226, and a GSD number of 1.272. Thereafter, the rpm of the overhead mixer is decreased to 70 and the pH of the reaction slurry is increased to 8.2 using a solution consisting of 57.692 grams of the chelating agent Versene^{™} 100 (an aqueous solution of the tetrasodium salt of ethylenediaminetetraacetic acid, available from Dow), and 346.154 grams of water to freeze the toner particles growth. 71.7 grams of 03.M HNO₃ is used to maintain pH 8.2 during this step. Once the toner particles are frozen, 11.1 grams of Calfax^{®} are added to the reaction slurry. The rpm is then increased to 160 and the reaction slurry is heated to 85 °C, with 16.3 grams of 4 weight percent NaOH needed to maintain pH at 8.2 for coalescence. The particles are left mixing at this temperature until the measured circularity is found to be 0.950. The toner is then quenched in ice water to stop coalescence, resulting in a final average particle size of 7.82 micrometers, GSD volume of 1.246, GSD number of 1.279, and a circularity of 0.954. The toner slurry is then cooled to room temperature, separated by sieving (25 micrometers), filtration, followed by washing and freeze drying.

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims. Unless specifically recited in a claim, steps or components of claims should not be implied or imported from the specification or any other claims as to any particular order, number, position, size, shape, angle, color, or material.

## Claims

1. A white toner having toner particles comprising:
a resin;
a BaSO₄ pigment; wherein a particle size is defined as Span = (Dn90-Dn10) / (Dn50); and wherein the BaSO₄ pigment has a wide particle size distribution wherein the Span is 0.75 or greater; and
an optional wax.

2. The white toner of claim 1, wherein the pigment consists essentially of the BaSO₄ pigment and wherein the toner is free of other pigment.

3. The white toner of claim 1, wherein the BaSO₄ pigment has a Dn50 median particle diameter of about 400 nanometers.

4. The white toner of claim 1, wherein the BaSO₄ pigment has a Dn10 particle diameter of about 250 nanometers.

5. The white toner of claim 1, wherein the BaSO₄ pigment has a Dn90 particle diameter of about 550 nanometers.

6. The white toner of claim 1, wherein the BaSO₄ pigment is present in the toner particle in an amount of from about 10 percent to about 35 percent by weight based upon the total weight of the toner particles.

7. The white toner of claim 1, wherein the resin comprises a member selected from the group consisting of an amorphous polyester, a crystalline polyester, and combinations thereof.

8. The white toner of claim 1, wherein the resin comprises a crystalline polyester and wherein the crystalline polyester comprises a member selected from the group consisting of poly(ethylene-adipate), poly(propylene-adipate), poly(butylene-adipate), poly(pentylene-adipate), poly(hexylene-adipate), poly(octylene-adipate), polyethylene-succinate), poly(propylene-succinate), poly(butylene-succinate), poly(pentylene-succinate), poly(hexylene-succinate), poly(octylene-succinate), poly(ethylene-sebacate), poly(propylene-sebacate), poly(butylene-sebacate), poly(pentylene-sebacate), poly(hexylene-sebacate), poly(octylene-sebacate), poly(nonylene-sebacate), poly(decylene-sebacate), poly(undecylene-sebacate), poly(dodecylene-sebacate), poly(ethylene-dodecanedioate), poly(propylene-dodecanedioate), poly(butylene-dodecanedioate), poly(pentylene-dodecanedioate), poly(hexylene-dodecanedioate), poly(octylene-dodecanedioate), poly(nonylene-dodecanedioate), poly(decylene-dodecandioate), poly(undecylene-dodecandioate), poly(dodecylene-dodecandioate), poly(ethylene-fumarate), poly(propylene-fumarate), poly(butylene-fumarate), poly(pentylene-fumarate), poly(hexylene-fumarate), poly(octylene-fumarate), poly(nonylene-fumarate), poly(decylene-fumarate), copoly(5-sulfoisophthaloyl)-copoly(ethylene-adipate), copoly(5-sulfoisophthaloyl)-copoly(propylene-adipate), copoly(5-sulfoisophthaloyl)-copoly(butylene-adipate), copoly(5-sulfo-isophthaloyl)-copoly(pentylene-adipate), copoly(5-sulfo-isophthaloyl)-copoly(hexylene-adipate), copoly(5-sulfo-isophthaloyl)-copoly(octylene-adipate), copoly(5-sulfo-isophthaloyl)-copoly(ethylene-adipate), copoly(5-sulfo-isophthaloyl)-copoly(propylene-adipate), copoly(5-sulfo-isophthaloyl)-copoly(butylene-adipate), copoly(5-sulfo-isophthaloyl)-copoly(pentylene-adipate), copoly(5-sulfo-isophthaloyl)-copoly(hexylene-adipate), copoly(5-sulfo-isophthaloyl)-copoly(octylene-adipate), copoly(5-sulfoisophthaloyl)-copoly(ethylene-succinate), copoly(5-sulfoisophthaloyl)-copoly(propylene-succinate), copoly(5-sulfoisophthaloyl)-copoly(butylene-succinate), copoly(5-sulfoisophthaloyl)-copoly(pentylene-succinate), copoly(5-sulfoisophthaloyl)-copoly(hexylene-succinate), copoly(5-sulfoisophthaloyl)-copoly(octylene-succinate), copoly(5-sulfo-isophthaloyl)-copoly(ethylene-sebacate), copoly(5-sulfo-isophthaloyl)-copoly(propylene-sebacate), copoly(5-sulfo-isophthaloyl)-copoly(butylene-sebacate), copoly(5-sulfo-isophthaloyl)-copoly(pentylene-sebacate), copoly(5-sulfo-isophthaloyl)-copoly(hexylene-sebacate), copoly(5-sulfo-isophthaloyl)-copoly(octylene-sebacate), copoly(5-sulfo-isophthaloyl)-copoly(ethylene-adipate), copoly(5-sulfo-isophthaloyl)-copoly(propylene-adipate), copoly(5-sulfo-isophthaloyl)-copoly(butylene-adipate), copoly(5-sulfo-isophthaloyl)-copoly(pentylene-adipate), copoly(5-sulfo-isophthaloyl)-copoly(hexylene-adipate), and mixtures thereof.

9. The white toner of claim 1, wherein the resin comprises an amorphous polyester and wherein the amorphous polyester comprises a member selected from the group consisting of propoxylated bisphenol A fumarate, poly(propoxylated bisphenol A co-fumarate), poly(ethoxylated bisphenol A co-fumarate), poly(butyloxylated bisphenol A co-fumarate), poly(co-propoxylated bisphenol A co-ethoxylated bisphenol A co-fumarate), poly(1,2-propylene fumarate), poly(propoxylated bisphenol A co-maleate), poly(ethoxylated bisphenol A co-maleate), poly(butyloxylated bisphenol A co-maleate), poly(co-propoxylated bisphenol A co-ethoxylated bisphenol A co-maleate), poly(1,2-propylene maleate), poly(propoxylated bisphenol A co-itaconate), poly(ethoxylated bisphenol A co-itaconate), poly(butyloxylated bisphenol A co-itaconate), poly(co-propoxylated bisphenol A co-ethoxylated bisphenol A co-itaconate), poly(1,2-propylene itaconate), and mixtures thereof.

10. The white toner of claim 1, wherein the resin comprises a propoxylated bisphenol A fumaric acid and a gel resin comprising a crosslinked propoxylated bisphenol A fumaric acid.

11. The white toner of claim 1, further comprising a surface additive comprising a member selected from the group consisting of silica, titanium dioxide, zinc stearate, and mixtures thereof.

12. The white toner of claim 1, wherein the toner is free of titanium dioxide.

13. A method for preparing a white pulverized toner, the method comprising:
mixing a resin; a BaSO₄ pigment, wherein a particle size is defined as Span = (Dn90-Dn10) / (Dn50), and wherein the BaSO₄ pigment has a wide particle size distribution wherein the Span is 0.75 or greater; an optional wax, and an optional internal additive to form a mixture;
melting and extruding the mixture to form a melt-kneaded product;
pulverizing the melt-kneaded product to form white toner particles;
optionally, classifying the white toner particles; and
optionally, disposing one or more surface additives onto the white toner particles.

14. The method of claim 13, wherein the pigment consists essentially of the BaSO₄ pigment and wherein the toner is free of other pigment.

15. The method of claim 13, wherein the BaSO₄ pigment has a Dn50 median particle diameter of about 400 nanometers.

16. The method of claim 13, wherein the BaSO₄ pigment has a Dn10 particle diameter of about 250 nanometers.

17. The method of claim 13, wherein the BaSO₄ pigment is present in the toner particle in an amount of from about 10 percent to about 35 percent by weight based upon the total weight of the toner particles.

18. An emulsion aggregation toner process comprising:
obtaining a latex of at least one resin;
obtaining an aqueous dispersion of a BaSO₄ pigment, wherein a particle size is defined as Span = (Dn90-Dn10) / (Dn50), and wherein the BaSO₄ pigment has a wide particle size distribution wherein the Span is 0.75 or greater;
optionally, obtaining an aqueous dispersion of an optional wax;
forming a mixture of the latex of at least one resin, the aqueous dispersion of the BaSO₄ pigment, and the aqueous dispersion of the optional wax;
heating the mixture to a first temperature;
maintaining the first temperature to form aggregated toner particles;
adding a latex of shell resin to form a shell over the aggregated particles;
optionally, adding a solution of a chelating agent;
stopping further aggregation and raising the temperature to a second temperature that is higher than the first temperature to coalesce the aggregated particles;
cooling, optionally washing, optionally drying, and recovering the emulsion aggregation toner particles.

19. The method of claim 18, wherein the BaSO₄ pigment has a Dn50 median particle diameter of about 400 nanometers.

20. The method of claim 18, wherein the pigment consists essentially of the BaSO₄ pigment and wherein the toner is free of other pigment.
